# EUROPÄISCHE PATENTSCHRIFT

(11) **EP 0 901 611 B1**
(45) Veröffentlichungstag und Bekanntmachung des Hinweises auf die Patenterteilung: **27.03.2002**
(21) Anmeldenummer: 97923995.1
(22) Anmeldetag: 23.05.1997
(51) Int. Cl.: G01D 5/347, G01D 5/38

(54) **OPTISCHER SENSOR ZUR BESTIMMUNG DES DREHWINKELS EINER DREHACHSE**
OPTICAL SENSOR FOR FINDING THE ANGLE OF ROTATION OF A ROTARY AXIS
DETECTEUR OPTIQUE POUR LA DETERMINATION DE L'ANGLE DE ROTATION D'UN AXE DE ROTATION

(30) Priorität: 25.05.1996 DE 19621188
(43) Veröffentlichungstag der Anmeldung: 17.03.1999
(73) Patentinhaber: Leica Geosystems AG, 9435 Heerbrugg (CH)
(72) Erfinder: BRAUNECKER, Bernhard, CH-9445 Rebstein (CH); ROGERS, John, Rice, Sierra Madre, CA 91024 (US); GÄCHTER, Bernhard, F., CH-9436 Balgach (CH)
(74) Vertreter: Büchel, Kurt F., Dr.
(86) Internationale Anmeldenummer: EP9702660
(87) Internationale Veröffentlichungsnummer: WO9745706

(56) Entgegenhaltungen:
- EP-A- 0 589 477
- FR-A- 2 675 572
- US-A- 5 448 358

## Beschreibung

Die Erfindung bezieht sich auf einen optischen Sensor zur Bestimmung des Drehwinkels einer Drehachse mit
a) einer optischen Strahlungsquelle, ersten und zweiten strahlungsumlenkenden und abbildenden optischen Elementen, einem ortsauflösenden optoelektronischen Detektor und
b) einer im Strahlengang zwischen den ersten und zweiten optischen Elementen angeordneten strukturierten Scheibe, die mit der Drehachse drehbar ist und deren Strukturen dem Drehwinkel zugeordnet sind und deren Strukturen zumindest teilweise von der Strahlung der Strahlungsquelle beleuchtet und auf den Detektor abgebildet oder projiziert werden.

In der US 5 448 358 wird ein optisches Positionsmeßgerät angegeben, mit dem relative Verschiebungen eines sich bewegenden Objektes gemessen werden können. Hierzu wird der Lichtstrahl einer Lichtquelle durch ein auf einem transparenten Substrat befindliches erstes Beugungsgitter in mehrere Lichtstrahlen aufgeteilt, die wiederum nach der Beugung an einem auf dem Objekt angebrachten Beugungsgitter-Maßstab auf ein zweites Beugungsgitter auf dem Substrat treffen. Dort überlagern sich die Lichtstrahlen verschiedener Beugungsordnungen, wobei die Interferenzphase von zwei Photosensoren gemessen wird.

Aus der EP 0 589 477 A2 ist ein Drehwinkelgeber bekannt, bei dem eine sich drehende Skala als Beugungsgitter ausgebildet ist. Ein darauf fallender Lichtstrahl wird gebeugt, wobei zwei gebeugte Lichtstrahlen vorbestimmter Ordnung mittels optischer Elemente auf eine zweite Stelle des Beugungsgitters geführt und dort wiederum gebeugt werden. Die Lichtstrahlen zweier Beugungsordnungen werden zur Interferenz gebracht. Die entstehenden Interferenzsignale werden von einem Photosensor detektiert, woraus die Drehung der Skala bezüglich des Photosensors bestimmt wird.

Optische Sensoren zur Bestimmung des Drehwinkels werden unter anderem in geodätischen Geräten zur Winkelvermessung eingesetzt. So werden beispielsweise in einem Theodoliten die Drehwinkel der Schwenkachsen des Theodolitfernrohrs gemessen, um dadurch den Höhenwinkel und den Seitenwinkel (Azimuth) zu einem anvisierten Zielpunkt zu bestimmen. Solche Drehwinkelmessungen sind aus der EP 00 85 951 B1 bekannt. Mittels einer Projektion von optischen Marken auf eine Fotoempfängeranordnung mit einer Vielzahl von Fotoempfängern wird die Lage der optischen Marken gemessen, um daraus eine Winkelinformation zu erhalten. Dazu sind die optischen Marken radial ausgerichtet und bilden einen codierten Meßkreis. Dieser wird mittels einer Lichtquelle und einer Optik beleuchtet und mit einer weiteren Optik auf die Fotoempfängeranordnung abgebildet. Dabei bestehen die Optiken aus einzelnen optischen Bauteilen, die über mechanische Fassungen und Halterungen zueinander, zur Lichtquelle und zur Fotoempfängeranordnung mechanisch verstellbar ausgerichtet werden müssen.

In der EP 0 417 742 B1 wird für ein Drehwinkelmeßgerät oder für die Anwendung in Drehgebern eine elektrooptische Abtasteinheit beschrieben, bei der Licht eine Kondensorlinse und eine Abtastplatte mit einer lichtdurchlässigen Teilung durchquert. Das Licht wird durch eine zur Abtastplatte bewegliche lichtdurchlässige Skala moduliert und anschließend von mindestens einem photoelektrischen Empfängerelement detektiert. Dabei ist jedes Empfängerelement mit Hilfe einer Feinjustierung einzeln nachstellbar, um eine optimale Position bezüglich der optischen Achse einstellen zu können. Eine derartige mechanische variable Einstellmöglichkeit der Empfängerelemente bedeutet einen erheblichen konstruktiven Aufwand.

Zusammengefaßt benötigen die genannten Drehwinkelmeßvorrichtungen zur optischen Strahlungsführung einzelne optische und mechanische Bauelemente, die einzeln hergestellt, gefaßt, montiert und zueinander genau justiert werden müssen. Die meisten der Bauelemente bleiben verschiebbar und justierbar. Dadurch ist der optisch-mechanische Aufbau aufwendig. Der Aufwand wird noch erhöht. wenn eine hohe optisch-mechanische oder thermische Stabilität gefordert wird.

Es ist Aufgabe der Erfindung, bei gleichbleibender oder verbesserter Meßgenauigkeit den optischen Aufbau eines Drehwinkelsensors aus Kosten-, Platzbedarfs- und Stabilitätsgründen und zur Erhöhung der Fertigungszuverlässigkeit zu miniaturisieren, wobei die Herstellung und Montage der optischen Bauteile möglichst in nur einem Arbeitsgang durchgeführt werden soll.

Die Aufgabe wird erfindungsgemäß dadurch gelöst, daß die optischen Elemente auf oder / und in einem Grundkörper aus optisch leitendem Material monolithisch integriert sind, wodurch die Strahlung innerhalb des Grundkörpers geführt wird, und im Bereich eines jeden oder an jedem der ersten und zweiten optischen Elemente die Strahlung genau einmal reflektiert wird oder nur eine Beugungsordnung der Strahlung weitergeführt wird und daß der Grundkörper Oberflächenbereiche aufweist, aus denen im Gebrauch die Strahlung nach den ersten optischen Elementen in Richtung der Scheibe austritt und in die die Strahlung nach ihrer Wechselwirkung mit den Strukturen der Scheibe in den Grundkörper wieder eintritt.

Vorteilhafte Weiterbildungen und Ausgestaltungen der Erfindung ergeben sich aus den Merkmalen der Unteransprüche.

Die monolithische Integration von optischen Elementen auf einem Quarzglassubstrat ist an sich bekannt. In Optics Letters, Vol. 18, No. 19 (Oct. 1, 1993), P. 1594-1596, wird zum Beispiel ein integriertes planares optisches Abbildungssystem beschrieben, mit dem die Struktur eines Pixel-Arrays von einer Eingangsseite zu einer Ausgangsseite eines hybrid aufgebauten Abbildungssystems über einen geschlossenen Strahlengang übertragen wird.

Erfindungsgemäß wird die Strahlungsführung so gestaltet, daß die Strahlung in einem bestimmten Bereich des Grundkörpers diesen verläßt, um mit den drehwinkelabhängigen Strukturen einer Scheibe in Wechselwirkung zu treten. Anschließend tritt die Strahlung wieder in den Grundkörper ein. Dabei sind alle Lageveränderungen der Strahlung auf dem Detektor ausschließlich auf die Wechselwirkung mit den Strukturen der Scheibe außerhalb des Grundkörpers zurückzuführen. Die Strahlungsführung im Grundkörper durch die monolithisch integrierten optischen Elemente bleibt stabil. Die monolithische Integration eröffnet darüber hinaus eine große Vielfalt an Gestaltungsmöglichkeiten für die optischen Elemente und eine einfache Anpassung bei Verwendung unterschiedlicher Scheiben mit unterschiedlich aufgebauten Strukturen.

Der Begriff der monolithischen Integration von optischen Elementen auf oder / und in einem Grundkörper soll hier sowohl im engeren als auch in einem weiteren Sinne verstanden werden. Streng monolithisch integriert bedeutet, daß alle optischen Elemente aus ein und demselben Grundkörper hervorgehen - direkt bei der Herstellung des Grundkörpers oder bei dessen Bearbeitung. So können beispielsweise optische Elemente aus dem Grundkörper herausgeätzt, herausgefräst oder in dem Grundkörper eingeätzt, eingefräst oder entsprechende Strukturen eingraviert, eingepreßt oder eingeprägt sein. Ebenso können sie auch durch Blankpressen oder durch Spritzgußverfahren entstehen.

Werden mehrere solcher Grundkörper fest und unlösbar miteinander verbunden, so soll diese Gesamtheit ebenfalls eine monolithische Einheit darstellen.

Im erweiterten Sinne soll als monolithische Integration auch die Replikation von optischen Elementen gelten. Dabei werden verformbare Materialien auf dem Grundkörper aufgebracht und mittels einer Abdruckform in eine bestimmte geometrische Form gebracht und dann z.B. durch chemische, thermische oder UV-Behandlung in ihrer Geometrie und auf dem Grundkörper fixiert. Dadurch sind die optischen Elemente bereits bei ihrer Erzeugung unlösbar zueinander ausgerichtet.

Schließlich sollen auch optische Elemente, die durch Aufdampfen von Materialien auf dem Grundkörper erzeugt werden, als monolithisch integriert verstanden werden.

Wie in vielen Anwendungen der Photonik werden auch bei einem modernen optischen Drehwinkelsensor eine Reihe von Anforderungen an das zugehörige optische System gestellt. Eine präzise Ausrichtung der optischen Komponenten untereinander und mechanische und thermische Langzeitstabilität werden ebenso gefordert wie eine geringe Größe des optischen Aufbaus und niedrige Herstelikosten. Für Vorrichtungen aus frei aufgebauten einzelnen optischen Komponenten ist es nicht möglich, alle Bedingungen gleichzeitig zu erfüllen. Alle bekannten Lösungen stellen Kompromisse mit Schwerpunkt auf einzelne Anforderungen dar. Erfindungsgemäß führt die monolithische Integration von optischen Bauelementen auf einem Grundkörper für einen Drehwinkelsensor zu einem zuverlässigen, kompakten und kostengünstigen optischen System, das nahezu alle Anforderungen gleichzeitig erfüllt.

Ein optisches Element kann für sich allein auf einem Grundkörper monolithisch integriert werden. Jedoch ergeben sich die großen Vorteile der monolithischen Integration durch die gleichzeitige Herstellung einer Vielzahl von gleichartigen oder verschiedenartigen optischen Elementen auf einem gemeinsamen Grundkörper. So können alle für den Drehwinkelsensor notwendigen abbildenden und strahlungsumlenkenden optischen Elemente als komplette Einheit in einem Herstellungsprozeß gleichzeitig entstehen. Dabei hat sich herausgestellt, daß die Fertigungszuverlässigkeit einer solchen Einheit sehr hoch ist.

Bei herkömmlichen optischen Aufbauten aus Einzelelementen werden unterschiedliche Materialien für die optischen Elemente und deren Fassungen und Halterungen verwendet, die unterschiedliche Materialeigenschaften wie unterschiedliche Wärmeausdehnungskoeffizienten besitzen. Demgegenüber sind die in einem einzigen Grundkörpermaterial monolithisch integrierten optischen Elemente hinsichtlich mechanischer und thermischer Einflüsse erheblich langzeitstabiler. Zudem sind sie aufgrund ihrer Herstellung bereits gegenseitig justiert und fest "montiert". Eine Verstellung oder Dejustage ist nicht mehr möglich. Durch den Wegfall von Montage- und Justierarbeiten werden Arbeitskosten eingespart und eine Massenproduktion ermöglicht. Auch die Materialkosten sind durch die Reduzierung vieler einzelner Komponenten zu einem einzigen Bauteil erheblich geringer. Nicht zuletzt bedeutet der kompakte Aufbau einer abbildenden Optik aus monolithisch integrierten optischen Elementen auf einem kleinen Grundkörper ein äußerst geringes Gewicht und eine sehr geringe Platzbeanspruchung im Vergleich zu einer herkömmlich aufgebauten Optik. Dies ist insbesondere beim Einsatz von tragbaren Vermessungsinstrumenten wie Theodoliten oder Digital-Nivellieren von Vorteil. Ganz in Analogie zu dem in solchen Geräten vorhandenen modernen elektronischen Aufbau mit den integrierten Schaltkreisen der Mikrochips wird somit auch der optische Aufbau leicht und kompakt gestaltet.

Für die Strahlungsführung können reflektive, refraktive oder diffraktive optische Elemente verwendet werden. Ais nichtabbildende optische Elemente zur Strahlungsführung innerhalb des Grundkörpers eignen sich vorteilhaft die Oberflächen des Grundkörpers selbst, an denen durch Totalreflexion eine Strahlungsumlenkung stattfinden kann. Eine Strahlungsumlenkung kann auch durch reflektierende Filme erreicht werden, die an bestimmten Stellen auf der Grundkörperoberfläche aufgebracht werden.

Die reflektiven optischen Elemente können aber auch sphärische oder asphärische Oberflächen besitzen. Dadurch erhalten sie zusätzlich auch abbildende Eigenschaften. Somit läßt sich die gesamte Optik des Drehwinkelsensors allein mit verschiedenen reflektiven Elementen darstellen und als eine einzige monolithische Einheit herstellen.

Eine solche Einheit kann beispielsweise aus Glas durch Blankpressen oder aus Kunststoff durch Spritztechnik hergestellt werden. Die so hergestellte monolithische Einheit kann auf einer Trägerplatte befestigt werden oder kann selber die Rolle der Trägerplatte übernehmen. Darüber hinaus können auch mehrere monolithische Einheiten - ggf. auch mit verschiedenen Grundkörpermaterialien - zu einer gesamten Einheit zusammengefaßt werden. Dabei können die einzelnen Einheiten einen bestimmten Abstand voneinander besitzen oder auch direkt aufeinander aufgebaut sein. Dadurch erhält man einen größeren Spielraum für die optischen Weglängen oder für die Anordnung der integrierten optischen Elemente untereinander.

In Analogie zu dem beschriebenen integrierten optischen Aufbau mit reflektiven optischen Elementen können ebenso refraktive Elemente auf einem Grundkörper oder auf mehreren Grundkörpern monolithisch integriert werden. Auch mit integrierten refraktiven optischen Elementen sind sowohl strahlungsumlenkende als auch abbildende Eigenschaften zu erreichen. Hierzu werden in bekannter Weise Prismen- und Linsenwirkungen ausgenutzt. Selbstverständlich ist eine Kombination von refraktiven und reflektiven optischen Elementen auf einem Grundkörper möglich. Aufgrund der monolithischen Integration ergeben sich für einen solchen Drehwinkelsensor Kosten- und Platzersparnisse.

Der Platzbedarf der beschriebenen refraktiven bzw. reflektiven Lösungen kann durch Anwendung von Fresnellinsen bzw. Fresnelspiegeln noch weiter reduziert werden. Fresnellinsen und -spiegel sind optische Elemente, deren Flächen nur stufenweise kontinuierlich sind.

Bei Stufenabmessungen in der Größenordnung der verwendeten optischen Wellenlänge ändert sich der physikalische Mechanismus der Strahlungsablenkung. Anstelle refraktiver, resp. reflektiver Wirkung wird die Strahlungsbeeinflussung nunmehr durch Beugungsphänomene physikalisch beschrieben.

Mit Hilfe derartiger diffraktiver Strukturen werden gleichfalls strahlungsumlenkende und abbildende optische Elemente hergestellt, wie z.B. mit einer Fresnel - Zonenplatte oder mit einem holographischen Element, also einem Element mit lokal variabler Gitterstruktur.

Derartige Mikrogitterstrukturen sind auf verschiedene Weise in der Oberfläche eines Grundkörpers implementierbar. Zum einen können die Strukturen dort durch Ätzen oder Prägen hergestellt werden. Zum anderen können sie auf die Grundkörperoberfläche aufgebracht, z.B. aufgedampft oder aufgeklebt werden. Verschiedene Lithografie-, Ätz- und Aufdampfverfahren sind bekannt. Insbesondere werden mit optischer Lithografie und reaktivem lonenätzen Strukturen auf Glassubstraten hergestellt.

Eine andere Gruppe von Verfahren zur Herstellung integrierter optischer Elemente sind holografische Verfahren, bei denen sich durch Interferenz mehrerer Lichtverteilungen Gebiete mit räumlich variierender Intensität erzeugen lassen. Bringt man eine, mit lichtempfindlichem Lack bestrichene Glasplatte in das Interferenzgebiet, kommt es zu einer entsprechend räumlich variablen Belichtung, die nach Entwicklung des Lacks als beugende Gitterstruktur im Sinne der oben gemachten Ausführungen wirkt.

Bei dem erfindungsgemäßen optischen Drehwinkelsensor wird mittels der Strahlungsquelle und ersten strahlungsumlenkenden und abbildenden monolithisch integrierten optischen Elementen die strukturierte Scheibe teilweise oder vollständig beleuchtet. Dazu verläßt die Strahlung den Grundkörper in einem dafür vorgesehenen Oberflächenbereich. Die beleuchteten Strukturen entwerfen ein Intensitätsmuster auf dem Detektor. Dazu tritt die von den Strukturen kommende Strahlung wieder in den Grundkörper ein und wird mittels zweiter optischer Elemente auf den Detektor geführt. Der ortsempfindliche optoelektronische Detektor setzt das Intensitätsmuster in entsprechende elektrische Signale zur weiteren Auswertung um. Da je nach Drehwinkellage der Scheibe ein verändertes Intensitätsmuster auf dem Detektor erscheint, kann daraus die Drehwinkellage der Scheibe ermittelt werden. Somit ist der Azimuthwinkel der Drehachse der Scheibe bestimmt.

Die Intensitätsmuster können durch unterschiedliche Arten von Strukturen erzeugt werden. So können auf der Scheibe ortsabhängig unterschiedlich reflektierende Strukturen aufgebracht sein. Die daran reflektierte Strahlung bildet ein entsprechendes Intensitätsmuster auf dem Detektor.

Ebenso kann die Scheibe mit ortsabhängig transmissiven Strukturen versehen sein und im Durchlicht verwendet werden. Dabei kann sich beispielsweise ein Teil der Scheibe durch einen Spalt im Grundkörper drehen und der Strahlungsaustritt aus dem Grundkörper oberhalb der Scheibe und der Strahlungseintritt in den Grundkörper unterhalb der Scheibe befinden. Die ortsabhängige Transmission der Scheibe führt ebenfalls zu entsprechenden Intensitätsmustem auf dem Detektor. Solche transmissiven Strukturen werden ebenso wie die oben genannten reflektiven Strukturen auf den Detektor projiziert oder abgebildet.

Andererseits können auf der Scheibe aber auch Strukturen mit anderen optischen Mechanismen implementiert werden. So können durch Brechung oder Beugung die Wellenfronten der Strahlung räumlich beeinflußt werden. Durch unterschiedlich brechende Strukturen auf der Scheibe wird die Strahlung in unterschiedliche Richtungen gelenkt. Durch Beugungsstrukturen entstehen Beugungsmaxima verschiedener Ordnungen. Somit können auch mit refraktiven oder diffraktiven Strukturen zweidimensionale Intensitätsmuster auf dem Detektor erzeugt werden.

Vorteilhafterweise werden die Strukturen auf der Scheibe monolithisch integriert. Dabei können die Strukturen eine Kreisringfläche oder die gesamte Fläche der Scheibe bedecken und sie können sogar derart ausgestaltet werden, daß sie neben der Erzeugung von Intensitätsmustern zugleich auch abbildende Eigenschaften aufweisen.

Die Auswertung des gemessenen Intensitätsmusters erfolgt beispielsweise mit der bekannten Methode der Mittelwertbildung oder durch Fit-Algorithmen.

Eine besondere Meßempfindlichkeit ergibt sich aus einem Intensitätsmuster, dessen Ortsgrundfrequenz oder eine seiner harmonischen Ortsoberfrequenzen mit der Ortsgrundfrequenz der strahlungsempfindlichen Strukturen des Detektors ein niederfrequentes Überlagerungsmuster bildet. Das niederfrequente Überlagerungsmuster wirkt in derselben Art und Weise wie ein Moirémuster. Von Moirémustern ist bekannt, daß sie sehr empfindlich auf eine Verschiebung der sie erzeugenden Strukturen reagieren. Dies bedeutet hier, daß bereits bei einer sehr geringen Veränderung des Intensitätsmusters auf dem Detektor gegenüber dessen Pixelstruktur sich das niederfrequente Überlagerungsmuster in seiner Ortsfrequenz stark ändert. Die Änderung des Überlagerungsmusters ist somit ein sehr empfindlich reagierender Indikator für Veränderungen des Drehwinkels der Scheibe, der dadurch sehr genau gemessen werden kann.

Zur Erzeugung eines solchen Überlagerungsmusters ist die monolithische Integration der Strukturen auf der Scheibe von entscheidender Bedeutung, da sie dadurch in ihren geometrischen Ausmaßen den sehr kleinen strahlungsempfindlichen Strukturen des Detektors entsprechend angepaßt und hergestellt werden können.

Im folgenden werden mehrere Ausführungsbeispiele der Erfindung anhand der Zeichnung näher erläutert. Es zeigt
- Fig. 1: eine schematische Querschnittsdarstellung eines optischen Drehwinkelsensors mit reflektiven optischen Elementen, die im strengen Sinne monolithisch integriert sind,
- Fig. 2: eine Variante von Fig.1 mit einer zusätzlichen Grundplatte,
- Fig. 3: eine schematische Querschnittsdarstellung eines optischen Drehwinkelsensors mit reflektiven optischen Elementen, die auf einem Grundkörper aufgebracht und mit diesem unlösbar verbunden sind,
- Fig. 4: eine Variante von Fig.3, bei der die optischen Elemente auf zwei verschiedenen Flächen des Grundkörpers angeordnet sind,
- Fig. 5: eine Variante von Fig.3, bei der die optischen Elemente mittels einer zusätzlichen Grundplatte auf zwei verschiedenen Flächen angeordnet sind,
- Fig. 6: eine schematische Querschnittsdarstellung eines optischen Drehwinkelsensors mit monolithisch integrierten refraktiven optischen Elementen,
- Fig. 7a: eine schematische Querschnittsdarstellung eines optischen Drehwinkelsensors mit monolithisch integrierten diffraktiven optischen Elementen und
- Fig. 7b: eine zu Fig. 7a zugehörige schematische räumliche Darstellung des optischen Drehwinkelsensors.

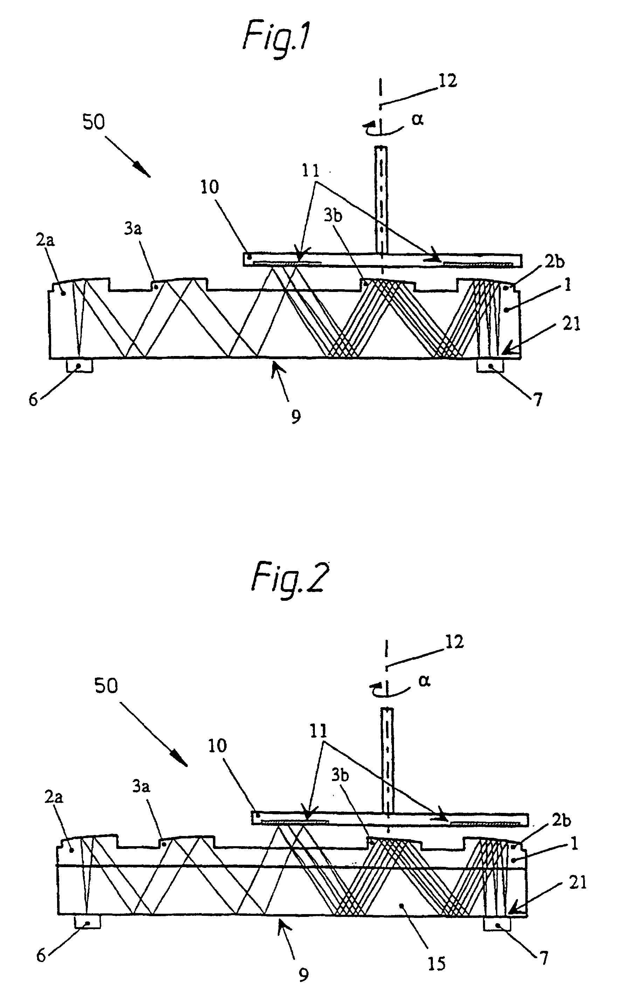

In Fig.1 ist ein erfindungsgemäßer optischer Drehwinkelsensor 50 schematisch im Querschnitt dargestellt. Er ist mit reflektiven optischen Elementen 2a, 2b, 3a, 3b ausgestattet, deren Reflexionseigenschaften für die Strahlungsführung ausgenutzt werden. Die optischen Elemente 2a, 2b, 3a, 3b sind gemäß der Definition zu Beginn der Beschreibung im strengen Sinn monolithisch integriert, d.h. sie bestehen aus ein und demselben Grundkörper 1 und sind bei dessen Herstellung oder Bearbeitung aus einem Stück hervorgegangen.

Die reflektiven optischen Elemente 2a, 2b, 3a, 3b sind in diesem Ausführungsbeispiel mit gekrümmten Oberflächen ausgebildet, weshalb sie abbildende Eigenschaften besitzen. Mittels einer Strahlungsquelle 6 und der ersten optischen Elemente 2a und 3a werden die Strukturen 11 einer Scheibe 10 teilweise beleuchtet. Dazu verläßt die Strahlung den Grundkörper in Richtung der Scheibe 10. Die Scheibe 10 ist mit der Drehachse 12 drehbar, die sich bezüglich des Grundkörpers 1 in einer festen räumlichen Lage befindet. Die Drehachse 12 kann z.B. jeweils die Schwenkachsen eines Theodoliten oder Tachymeters zur Höhen- und Seitenwinkelvermessung darstellen. Die Strukturen 11 der Scheibe 10 sind dem Drehwinkel α der Drehachse 12 zugeordnet.

Nach der Wechselwirkung der Strahlung mit den Strukturen 11 tritt die Strahlung wieder in den Grundkörper 1 ein und wird durch die zweiten optischen Elemente 3b und 2b auf einen ortsempfindlichen optoelektronischen Detektor 7 fokussiert. Durch die Strukturen 11 wird ein Intensitätsmuster 21 auf dem Detektor 7 erzeugt. Die zugehörigen Detektorsignale werden in einer hier nicht dargestellten Auswerteelektronik verarbeitet.

Die ebene Fläche 9 des Grundkörpers 1 dient der Strahlungsreflexion, um insgesamt einen kontinuierlichen Strahlengang zu gewährleisten. Zu diesem Zweck kann die Fläche 9 mit reflektierenden Materialien beschichtet oder bedampft sein. Diese Möglichkeit gibt es auch für die Oberflächen der reflektiven optischen Elemente 2a, 2b, 3a, 3b. Ebenso kann aber auch die Totalreflexion ausgenutzt werden.

Die Darstellung in Fig.1 zeigt alle Elemente des Drehwinkelsensors 50 wie die Strahlungsquelle 6, die Scheibe 10, den Detektor 7 und die optischen Elemente 2a, 2b, 3a, 3b linear hintereinander angeordnet. Dies ist für die Gesamtfunktion des Drehwinkelsensors 50 aber nicht zwingend notwendig. Die genannten Elemente können auch seitlich versetzt zueinander auf bzw. in dem Grundkörper 1 monolithisch integriert sein, wobei die Strahlungsführung entsprechend ausgelegt wird.

Die Strukturen 11 der Scheibe 10 können für die auftreffende Strahlung reflektiv, refraktiv oder diffraktiv sein. Es können auch transmissive Strukturen 11 verwendet werden, wenn der Grundkörper eine entsprechende Form für den Betrieb der Scheibe 10 in Transmission aufweist, wie oben bereits beschrieben. Da die Strukturen 11 in Abhängigkeit des Drehwinkels α ein unterschiedliches Intensitätsmuster 21 erzeugen, kann mit Hilfe einer vorangegangenen Kalibrierung oder durch die Kenntnis der Lage der Strukturen 11 auf der Scheibe 10 der augenblickliche Drehwinkel α der Scheibe 10 aus dem vom Detektor 7 aufgenommenen Intensitätsmuster 21 bestimmt werden. Über die Erzeugung eines Intensitätsmusters 21 hinausgehend können die vorzugsweise monolithisch integrierten reflektiven, refraktiven oder diffraktiven Strukturen 11 so gestaltet werden, daß sie zusätzlich auch abbildende Eigenschaften besitzen. Die nachfolgenden zweiten optischen Elemente 3b,2b müssen natürlich darauf abgestimmt sein, gegebenenfalls können sie sogar entfallen.

Der Strahlengang gemäß Fig.1 verläuft - von seinem Weg zwischen Grundkörper 1 und Scheibe 10 abgesehen - ausschließlich innerhalb des Grundkörpers 1. Deshalb kann diese Anordnung in hohem Maße kompakt gestaltet werden. Somit zeichnet sie sich auch durch eine hohe Stabilität aus. Allerdings werden an den Grundkörper 1 hohe Anforderungen hinsichtlich der optischen Homogenität gestellt.

Diese Anforderungen können mit einem dünneren Grundkörper 1 verringert werden. So zeigt Fig. 2 eine Variante des Drehwinkelsensors 50 von Fig. 1, bei der zusätzlich eine Grundplatte 15 auf dem Grundkörper 1 aufgekittet oder aufgesprengt ist. Die Grundplatte 15 dient zum einen als Trägerplatte. Dadurch kann der Grundkörper 1 mit den monolithisch integrierten optischen Elementen 2a, 2b, 3a, 3b vorteilhafterweise dünn gehalten werden. Über die Dicke der Grundplatte 15 wird zudem ein Anpassungsfreiheitsgrad, z.B. für eine Nachfokussierung gewonnen. Die Grundplatte 15 kann aus dem gleichen Material bestehen wie der Grundkörper 1. Die Gesamtfunktion der Anordnung gemäß Fig.2 ist dieselbe wie unter Fig.1 beschrieben.

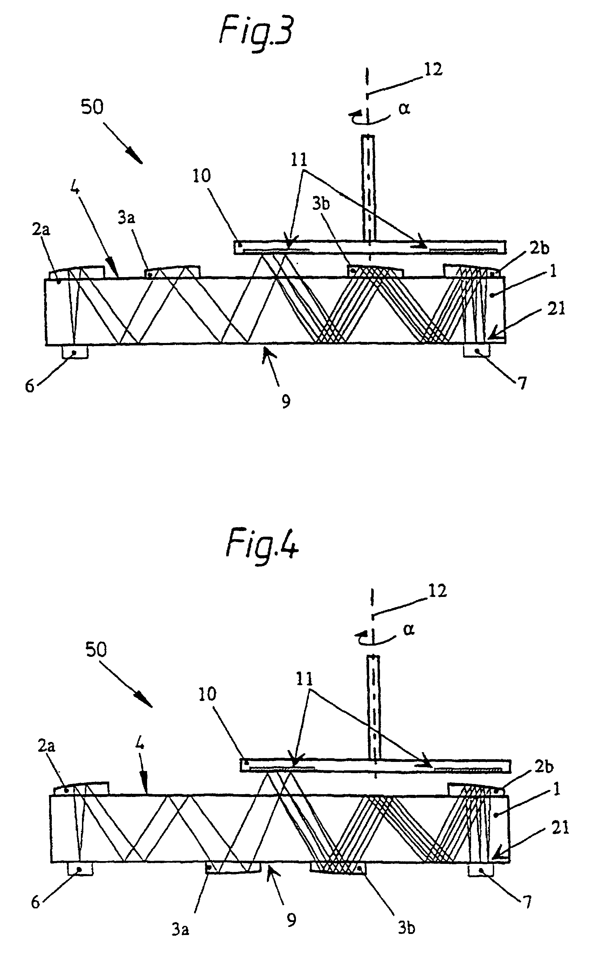

Fig. 3 zeigt eine schematische Querschnittsdarstellung eines Drehwinkelsensors 50 mit reflektiven optischen Elementen 2a, 2b, 3a, 3b, die durch Replikation auf einer Fläche 4 auf dem Grundkörper 1 erzeugt wurden. Bei der Replikation werden verformbare Materialien auf dem Grundkörper 1 aufgebracht und mit Hilfe eines Werkzeugs, z. B. einer Negativform, zu geeigneten, die optischen Eigenschaften bestimmenden Strukturen gepreßt. Diese Strukturen werden durch chemische, thermische oder UV-Behandlung fixiert. Die optischen Elemente 2a, 2b, 3a, 3b sind damit bereits bei ihrer Erzeugung zueinander ausgerichtet und unlösbar mit dem Grundkörper 1 verbunden. Sie sind auf einer einzigen Fläche 4 des Grundkörpers 1 angeordnet. Die Funktionsweise ist die gleiche wie unter Fig.1 beschrieben.

In Fig. 4 ist eine Variante der Darstellung von Fig. 3 zu sehen, bei der die optischen Elementen 2a, 2b, 3a, 3b auf zwei verschiedenen Flächen 9 und 4 angeordnet sind.

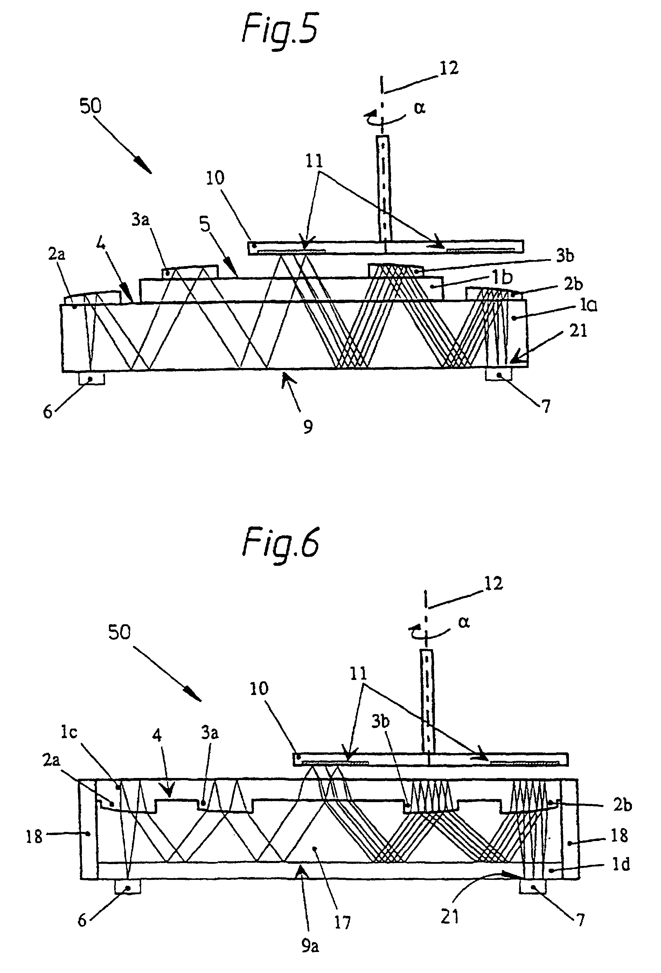

Ebenso sind auch in Fig. 5 die optischen Elemente 2a, 2b, 3a, 3b auf zwei unterschiedlichen Flächen 4 und 5 angeordnet, die zu den Grundkörpern 1a und 1b gehören. Die Grundkörper 1a und 1b sind als Platten mit ebenen Oberflächen ausgebildet. Grundsätzlich können die Flächen 4, 5 und 9 bei allen Ausführungsbeispielen auch gekrümmt sein. Sie können sogar als Linsenoberflächen dienen. Die Grundkörper 1a und 1b können aus verschiedenen Materialien bestehen.

Über die Darstellung gemäß Fig. 5 hinausgehend können natürlich auch mehr als zwei der in Fig. 5 gezeigten Grundkörper 1a und 1b verwendet werden, um so einen mehrstöckigen Drehwinkelsensor aufzubauen. Ebenso können auch zusätzliche optische Elemente 2a, 2b, 3a und 3b sowohl auf den Flächen 4 und 5 als auch auf der Fläche 9 monolithisch integriert werden. Damit lassen sich optische Abbildungseigenschaften verbessern. Weiterhin können auch an den Flächen 4 und 5 selbst zusätzliche Reflexionen stattfinden derart, wie sie an der Fläche 9 in Fig.5 dargestellt sind. Durch die Anzahl der Reflexionen werden die Längen der optischen Wegstrecken zwischen der Strahlungsquelle 6, den optischen Elementen 2a, 3a, den Elementen 3b, 2b und dem Detektor 7 bestimmt. Somit ergibt sich ein zusätzlicher Freiheitsgrad für die optischen Abstände der abbildenden Elemente 2a, 2b, 3a, 3b. Dies kann auch durch unterschiedliche Dicken der Grundkörper 1a und 1b oder durch Verwendung unterschiedlichen optischen Materials der Grundkörper 1a und 1b geschehen.

Selbstverständlich sind alle unter der Figurenbeschreibung von Fig.4 und Fig.5 genannten Variationssmöglichkeiten in Analogie auch mit den Drehwinkelsensoren 50 gemäß der Figuren 1 oder 2 realisierbar.

Fig. 6 zeigt eine schematische Querschnittsdarstellung eines Drehwinkelsensors 50 mit refraktiven optischen Elementen 2a, 2b, 3a, 3b, die in einem Grundkörper 1c monolithisch integriert sind. Bei diesen optischen Elementen werden deren Brechungseigenschaften für die Strahlungsführung ausgenutzt. Der Grundkörper 1c ist mit einer Platte 1d über eine mechanische Halterung 18 starr verbunden. Die Strahlungsquelle 6 und der Detektor 7 befinden sich auf der Unterseite der Platte 1d. Das Medium 17 zwischen dem Grundkörper 1c und der Platte 1d besteht im einfachsten Fall aus Luft, kann aber auch aus anderen gasförmigen, flüssigen oder festen Substanzen mit geeignetem Brechungsindex bestehen.

Die Strahlung der Strahlungsquelle 6 wird bei Übergängen zwischen dem Medium 17 und dem Grundkörper 1c gebrochen. Durch die gekrümmten Oberflächen der refraktiven optischen Elemente 2a, 2b, 3a, 3b ergeben sich abbildende Eigenschaften. Dabei werden an die Krümmung der Oberflächen geringere Genauigkeitsanforderungen gestellt als es bei den oben beschriebenen reflektiven optischen Elementen erforderlich ist.

Die Oberfläche 9a der Platte 1d reflektiert die Strahlung, so daß sich ein fortlaufender Strahlengang ergibt. Auch in diesem Ausführungsbeispiel werden die Strukturen 11 der Scheibe 10 beleuchtet und die Strukturen 11 liefern auf dem Detektor 7 ein Intensitätsmuster 21.

Natürlich kann die Platte 1d durch einen dem Grundkörper 1c ähnlichen Grundkörper mit weiteren optischen Elementen 2a, 2b, 3a, 3b ersetzt werden, so daß die monolithisch integrierten refraktiven Elemente 2a, 2b, 3a, 3b auf zwei unterschiedlichen Flächen angeordnet sind. Darüber hinaus sollen für den Drehwinkelsensor 50 mit refraktiven optischen Elementen 2a, 2b, 3a, 3b auch alle Ausführungsformen in Analogie zu den Varianten der Darstellungen in den Figuren 2 bis 5 gelten.

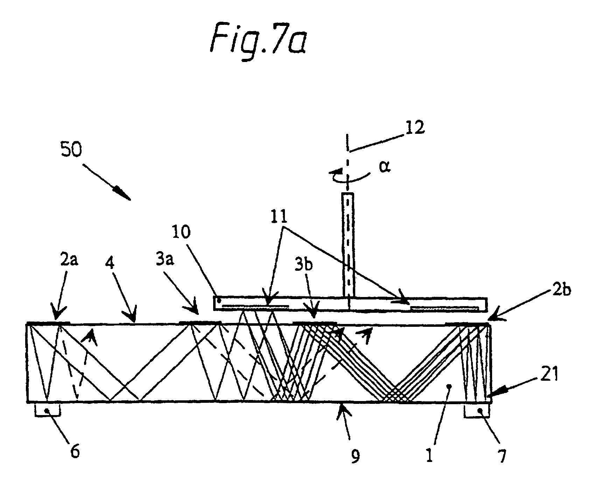

Fig. 7a zeigt eine schematische Querschnittsdarstellung eines Drehwinkelsensors 50 mit monolithisch integrierten diffraktiven optischen Elemente 2a, 2b, 3a, 3b, die auf einer Fläche 4 angeordnet sind. Bei diesen optischen Elementen werden deren beugende Eigenschaften zur Strahlungsführung ausgenutzt. Aufgrund dieser Eigenschaften erzeugt jedes der diffraktiven Elemente 2a, 2b, 3a, 3b eine Strahlung mit mehreren Beugungsordnungen. Die verschiedenen Beugungsordnungen unterscheiden sich durch ihre Strahlungsrichtung. Ein jeweils nachfolgendes diffraktives optisches Element ist dabei so angeordnet, daß es die Stahlung einer Beugungsordnung empfangen kann. Dies wird mit den durchgezogenen Linien in Fig. 7a symbolisiert. Die Strahlung der übrigen Beugungsordnungen wird entweder absorbiert oder verläßt den Drehwinkelsensor 50 anderweitig ohne dabei auf den Detektor 7 zu gelangen. Diesen Fall repräsentieren die gestrichelten Linien.

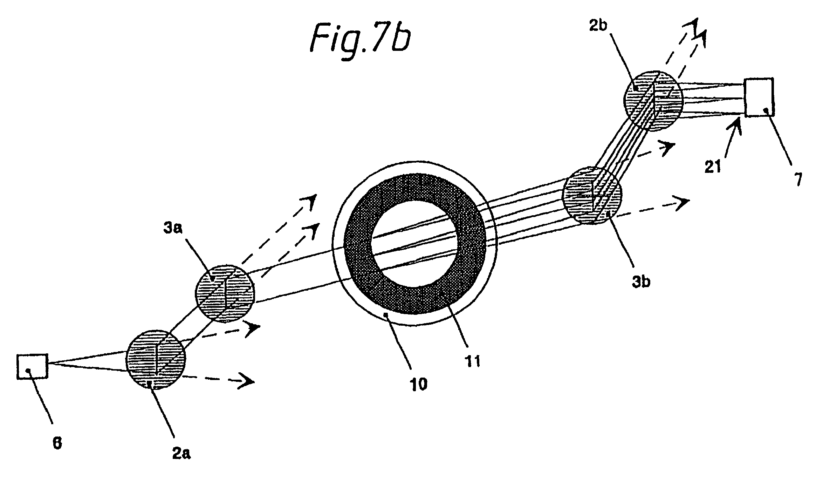

Zur Fig. 7a korrespondierend zeigt Fig. 7b eine schematische räumliche Darstellung des Drehwinkelsensors 50. Hierbei wird die versetzte Anordnung der Strahlungsquelle 6, der optischen Elemente 2a, 2b, 3a, 3b, der Scheibe 10 und des Detektors 7 zueinander deutlich. Dadurch erreicht beispielsweise die vom optischen Element 2a erzeugte und gestrichelt dargestellte Strahlung der Beugung 0. Ordnung das optische Element 3a nicht, jedoch die Strahlung mindestens einer höheren Beugungsordnung (durchgezogene Linien). Aufgrund der Beugung gehorchen Einfallswinkel und Ausfallswinkel der Strahlung an den diffraktiven Elementen 2a, 2b, 3a, 3b nicht dem bekannten Reflexionsgesetz an spiegelnden Flächen. Den Beugungswinkeln entsprechend werden die diffraktiven Elemente 2a, 2b, 3a, 3b auf dem Grundkörper 1 angeordnet. Dabei soll letztlich den Detektor 7 die Strahlung vorzugsweise nur einer Beugungsordnung erreichen.

Die diffraktiven optischen Elemente 2a, 2b, 3a, 3b können auch in verschiedenen Flächen des Grundkörpers 1 monolithisch integriert sein analog zu den Darstellungen der Fig. 4 und 5 (Flächen 9, 4, 5). Auch eine analoge Ausführungsform gemäß Fig. 2 mit einer zusätzlichen Grundplatte 15 soll für einen Drehwinkelsensor 50 mit diffraktiven optischen Elementen 2a, 2b, 3a, 3b gelten.

Im übrigen kann für jede der in den Figuren dargestellten Ausführungsformen auch eine Kombination von reflektiven, refraktiven und diffraktiven optischen Elementen 2a, 2b, 3a, 3b auf dem Grundkörper 1 monolithisch integriert sein.

## Patentansprüche

1. Optischer Sensor (50) zur Bestimmung des Drehwinkels (α) einer Drehachse (12) mit
a) einer optischen Strahlungsquelle (6), ersten und zweiten strahlungsumlenkenden und abbildenden optischen Elementen (2a,3a; 2b,3b), einem ortsauflösenden optoelektronischen Detektor (7) und
b) einer im Strahlengang zwischen den ersten und zweiten optischen Elementen (2a,3a; 2b,3b) angeordneten strukturierten Scheibe (10), die mit der Drehachse (12) drehbar ist und deren Strukturen (11) dem Drehwinkel (α) zugeordnet sind und deren Strukturen (11) im Gebrauch zumindest teilweise von der Strahlung der Strahlungsquelle (6) beleuchtet und auf den Detektor (7) abgebildet oder projiziert werden,
wobei
c) die optischen Elemente (2a,3a; 2b,3b) auf oder / und in einem Grundkörper (1; 1a,1b;1c) aus optisch leitendem Material monolithisch integriert sind, wodurch die Strahlung innerhalb des Grundkörpers (1; 1a,1b;1c) geführt wird,
d) im Bereich eines jeden oder an jedem der ersten und zweiten optischen Elemente (2a,3a; 2b,3b) die Strahlung genau einmal reflektiert wird oder nur eine Beugungsordnung der Strahlung weitergeführt wird und
e) daß der Grundkörper (1; 1a,1b;1c) Oberflächenbereiche aufweist, aus denen im Gebrauch die Strahlung nach den ersten optischen Elementen (2a, 3a) in Richtung der Scheibe (10) austritt und in die die Strahlung nach ihrer Wechselwirkung mit den Strukturen (11) der Scheibe (10) in den Grundkörper (1; 1a,1b;1c) wieder eintritt.

2. Optischer Sensor nach Anspruch 1, **dadurch gekennzeichnet, daß** die optischen Elemente (2a, 2b, 3a, 3b) im Grundkörper (1; 1a,1b;1c) durch Lithografie, durch Ätzen, Fräsen, Gravieren, Prägen, Blankpressen oder durch Spritzgußverfahren monolithisch integriert sind.

3. Optischer Sensor nach Anspruch 1, **dadurch gekennzeichnet, daß** die optischen Elemente (2a, 2b, 3a, 3b) auf dem Grundkörper (1; 1a,1b;1c) aufgedampft oder repliziert sind.

4. Optischer Sensor nach einem der vorherigen Ansprüche, **dadurch gekennzeichnet, daß** die optischen Elemente (2a, 2b, 3a, 3b) reflektive Elemente sind.

5. Optischer Sensor nach einem der Ansprüche 1 bis 3, **dadurch gekennzeichnet, daß** die optischen Elemente (2a,2b,3a,3b) refraktive Elemente sind.

6. Optischer Sensor nach einem der Ansprüche 1 bis 3, **dadurch gekennzeichnet, daß** die optischen Elemente (2a, 2b, 3a, 3b) aus diffraktiven Strukturen aufgebaut sind.

7. Optischer Sensor nach Anspruch 6, **dadurch gekennzeichnet, daß** die optischen Elemente (2a, 2b, 3a, 3b) derart aufgebaut und zueinander angeordnet sind, daß ausschließlich die Strahlung aus nur einer Beugungsordnung letztlich den Detektor (7) erreicht.

8. Optischer Sensor nach einem der Ansprüche 1 bis 3, **dadurch gekennzeichnet, daß** auf dem Grundkörper (1; 1a,1b;1c) eine Kombination von reflektiven, refraktiven und diffraktiven optischen Elementen (2a, 2b, 3a, 3b) monolithisch integriert ist.

9. Optischer Sensor nach einem der vorherigen Ansprüche, **dadurch gekennzeichnet, daß** die optischen Elemente (2a, 2b, 3a, 3b) auf einer einzigen Fläche (4) des Grundkörpers (1; 1a,1b;1c) angeordnet sind.

10. Optischer Sensor nach einem der Ansprüche 1 bis 8, **dadurch gekennzeichnet, daß** die optischen Elemente (2a, 2b, 3a, 3b) auf verschiedenen Flächen (4, 5, 9) des Grundkörpers (1; 1a, 1b; 1c) angeordnet sind.

11. Optischer Sensor nach einem der vorherigen Ansprüche, **dadurch gekennzeichnet, daß** die Strukturen (11) auf der Scheibe (10) monolithisch integriert sind und reflektive, refraktive und / oder diffraktive optische Eigenschaften derart aufweisen, daß sie auf dem Detektor (7) ein vom Drehwinkel (α) der Scheibe (10) abhängiges Intensitätsmuster (21) entwerfen.

12. Optischer Sensor nach Anspruch 11, **dadurch gekennzeichnet, daß** die Strukturen (11) auf der Scheibe (10) zugleich abbildende Eigenschaften aufweisen.

13. Optischer Sensor nach Anspruch 11 oder 12, **dadurch gekennzeichnet, daß** zur Verbesserung der Meßgenauigkeit die Ortsgrundfrequenz oder eine harmonische Ortsoberfrequenz des von den Strukturen (11) der Scheibe (10) auf dem Detektor (7) erzeugten Intensitätsmusters (21) mit der Ortsgrundfrequenz der strahlungsempfindlichen Strukturen des Detektors (7) ein niederfrequentes Überlagerungsmuster bildet.

## Claims

1. Optical sensor (50) for determining the angle (α) of rotation of an axis (12) of rotation, comprising
a) an optical radiation source (6), first and second radiation-deflecting focusing optical elements (2a, 3a; 2b, 3b), a position-resolving optoelectronic detector (7) and
b) a structured disc (10) which is arranged in the beam path between the first and second optical elements (2a, 3a; 2b, 3b) and is rotatable with the axis (12) of rotation and whose structures (11) are coordinated with the angle (α) of rotation and whose structures (11), during use, are illuminated at least partly by the radiation of the radiation source (6) and are focused or projected onto the detector (7),
c) the optical elements (2a, 3a; 2b, 3b) being monolithically integrated on and/or in a base member (1; 1a, 1b; 1c) comprising optically conducting material, with the result that the radiation is guided inside the base member (1; 1a, 1b; 1c),
d) the radiation being reflected exactly once or only one diffraction order of the radiation being passed on in the region of each or at each of the first and second optical elements (2a, 3a; 2b, 3b) and
e) the base member (1; 1a, 1b; 1c) having surface regions from which, during use, the radiation emerges after the first optical elements (2a, 3a) in the direction of the disc (10) and in which the radiation, after its interaction with the structures (11) of the disc (10), enters the base member (1; 1a, 1b; 1c) again.

2. Optical sensor according to Claim 1, **characterized in that** the optical elements (2a, 2b, 3a, 3b) in the base member (1; 1a, 1b; 1c) are monolithically integrated by lithography, by etching, milling, engraving, embossing or blank pressing or by injection moulding methods.

3. Optical sensor according to Claim 1, **characterized in that** the optical elements (2a, 2b, 3a, 3b) are applied to the base member (1; 1a, 1b; 1c) by vapour deposition or replication.

4. Optical sensor according to any of the preceding Claims, **characterized in that** the optical elements (2a, 2b, 3a, 3b) are reflective elements.

5. Optical sensor according to any of Claims 1 to 3, **characterized in that** the optical elements (2a, 2b, 3a, 3b) are refractive elements.

6. Optical sensor according to any of Claims 1 to 3, **characterized in that** the optical elements (2a, 2b, 3a, 3b) are composed of diffractive structures.

7. Optical sensor according to Claim 6, **characterized in that** the optical elements (2a, 2b, 3a, 3b) are designed and arranged relative to one another in such a way that exclusively the radiation of only one diffraction order finally reaches the detector (7).

8. Optical sensor according to any of Claims 1 to 3, **characterized in that** a combination of reflective, refractive and diffractive optical elements (2a, 2b, 3a, 3b) is monolithically integrated on the base member (1; 1a, 1b; 1c).

9. Optical sensor according to any of the preceding Claims, **characterized in that** the optical elements (2a, 2b, 3a, 3b) are arranged on a single surface (4) of the base member (1; 1a, 1b; 1c).

10. Optical sensor according to any of Claims 1 to 8, **characterized in that** the optical elements (2a, 2b, 3a, 3b)) are arranged on different surfaces (4, 5, 9) of the base member (1; 1a, 1b; 1c).

11. Optical sensor according to any of the preceding Claims, **characterized in that** the structures (11) are monolithically integrated on the disc (10) and have reflective, refractive and/or diffractive optical properties so that they throw onto the detector (7) an intensity pattern (21) dependent on the angle (α) of rotation of the disc (10).

12. Optical sensor according to Claim 11, **characterized in that** the structures (11) on the disc (10) simultaneously have focusing properties.

13. Optical sensor according to Claim 11 or 12, **characterized in that**, for improving the accuracy of measurement, the fundamental spatial frequency or a harmonic spatial frequency of the intensity pattern (21) produced by the structures (11) of the disc (10) on the detector (7), together with the fundamental spatial frequency of the radiation-sensitive structures of the detector (7) forms a low-frequency superposition pattern.

## Revendications

1. Capteur optique (50) pour déterminer l'angle de rotation (α) d'un axe de rotation (12), avec
a) une source de rayonnement optique (6), des premiers et deuxièmes éléments optiques (2a,3a;2b,3b) déviant les rayons et produisant une illustration, un détecteur (7) optoélectronique présentant une résolution locale, et
b) un disque (10) structuré, disposé dans le trajet des rayons, entre les premiers et deuxièmes éléments optiques (2a,3a;2b,3b), susceptibles de tourner avec l'axe de rotation (12), et dont les structures (11) sont associées à l'angle de rotation (α), et dont les structures (11) en utilisation, sont illuminées au moins partiellement par le rayonnement venant de la source de rayonnement (6) et illustrées ou projetées sur le détecteur (7),
où
c) les éléments optiques (2a,3a;2b,3b) sont intégrés de façon monolithique en un matériau conducteur optique sur ou/et dans un corps de base (1;1a,1b;1e), faisant que le rayonnement est guidé à l'intérieur du corps de base (1;1b,1b;1c),
d) dans la zone de chacun des éléments ou sur chacun des premiers et deuxièmes éléments optiques (2a,3a;2b,3b), le rayonnement est réfléchi une première fois de façon précise, ou bien seul un ordre de diffraction du rayonnement est retransmis, et
e) le corps de base (1;1a,1b;1c) présente des zones de surface, desquelles, en utilisation, après les premiers éléments optiques (2a,3a) le rayonnement sort dans la direction du disque (10), et dans lesquelles, après son interaction avec les structures (11) du disque (10), le rayonnement ré-pénètre dans le corps de base (1;1a,1b;1c).

2. Capteur optique selon la revendication 1, **caractérisé en ce que** les éléments optiques (2a,2b,3a,3b) dans les corps de base (1;1a,1b;1c) sont intégrés de façon monolithique, par lithographie, par gravure chimique, fraisage, gravure mécanique, façonnage tridimensionnel, pressage d'ébauche ou par un procédé de moulage par injection.

3. Capteur optique selon la revendication 1, **caractérisé en ce que** les éléments optiques (2a,2b,3a,3b) sont appliquées par métallisation sous vide ou bien sont répliqués sur le corps de base (1;1a,1b;1c).

4. Capteur optique selon l'une des revendications précédentes, **caractérisé en ce que** les éléments optiques (2a,2b,3a,3b) sont des éléments à réflexion.

5. Capteur optique selon l'une des revendications 1 à 3, **caractérisé en ce que** les éléments optiques (2a,2b,3a,3b) sont des éléments à réfraction.

6. Capteur optique selon l'une des revendications là 3, **caractérisé en ce que** les éléments optiques (1a,2b,3a,3b) sont constitués de structures à diffraction.

7. Capteur optique selon la revendication 6, **caractérisé en ce que** les éléments optiques (2a,2b,3a,3b) sont construits et disposés les uns par rapport aux autres de manière à ce que le rayonnement n'atteigne le détecteur (7) que depuis uniquement un ordre de diffraction.

8. Capteur optique selon l'une des revendications 1 à 3, **caractérisé en ce qu'**une combinaison d'éléments optiques (2a,2b,3a,3b) à réflexion, réfraction ou diffraction, est intégrée de façon monolithique sur le corps de base (1;1a,1b;1c).

9. Capteur optique selon l'une des revendications précédentes, **caractérisé en ce que** les éléments optiques (2a,2b,3a,3b) sont disposés sur une surface (4) unique du corps de base (1;1a,1b;1c).

10. Capteur optique selon l'une des revendications 1 à 8, **caractérisé en ce que** les éléments optiques (2a,2b,3a,3b) sont disposés sur des surfaces (4,5,9) différentes du corps de base (1;1a,1b;1c).

11. Capteur optique selon l'une des revendications précédentes, **caractérisé en ce que** les structures (11) sont intégrées de façon monolithique sur le disque (10) et présentent des propriétés de réflexion, réfraction et/ou diffraction, **en ce qu'**elles projettent sur le détecteur (7) un motif d'intensité (21) dépendant de l'angle de rotation (α) du disque (10).

12. Capteur optique selon la revendication 11, **caractérisé en ce que** les structures (11) présentes sur le disque (10) ont en même temps des propriétés d'illustration.

13. Capteur optique selon la revendication 11 ou la revendication 12, **caractérisé en ce que**, pour améliorer la précision de mesure, la fréquence de base locale ou bien une fréquence locale supérieure harmonique du motif d'intensité (21) généré par les structures (11) du disque (10) sur le détecteur (7) forme, avec la fréquence fondamentale locale des structures, sensibles au rayonnement, du détecteur (7) un motif de superposition à basse fréquence.
